Europäisches Patentamt

European Patent Office

Office européen des brevets

(19)

(11) Publication number: **0 292 916**
A1

# EUROPEAN PATENT APPLICATION

(21) Application number: **88108263.0**

(51) Int. Cl.⁴: **H04M 1/27**

(22) Date of filing: **24.05.88**

(30) Priority: **22.05.87 IT 4796587**

(43) Date of publication of application:
**30.11.88 Bulletin 88/48**

(84) Designated Contracting States:
**AT CH DE FR GB LI NL SE**

(71) Applicant: **SISTEL SISTEMI ELETTRONICI S.P.A.**
**Via Tiburtina 1210**
**Roma(IT)**

(72) Inventor: **Durantini, Antonio Mauro**
**Via Gaspara Stampa 44**
**I-00137 Roma(IT)**

(74) Representative: **Gustorf, Gerhard, Dipl.-Ing.**
**Patentanwalt Dipl.-Ing. Gerhard Gustorf**
**Mühlenstrasse 1**
**D-8300 Landshut(DE)**

(54) **Telephone system able to recognise one or more voices and to reply by furnishing information.**

(57) Telephone system, formed by a conventional telephone, loudspeaker, microphone, voice interface, keyboard, LED display, name and number memory (directory), and in addition by a serializer and timer all controlled by a microprocessor. With this system, after making himself recognised by pronouncing or typing a key word, the user can request a telephone call by voice from one of the numbers memorized from the predetermined list. The system is then able to effect a connection or to inform the user that the connection cannot be effected, e.g. because the line is engaged.

This system can be usefully employed:
- in private houses
- in offices
- etc.

In addition, if it is connected to a miniaturized transmitter receiver, it can be used as a portable telephone operating within a determined radius from the telephone base.

FIG 1

## Telephone system able to recognise one or more voices and to reply by furnishing information

This invention, which will from now an be referred to as PARITEL, is a telephone system formed by parts which are not new but, assembled in the way described below, represent a step forward in the technique of telephonic communications. The said system is formed by the following parts:

- conventional telephone
- loudspeaker
- microphone
- voice interface
- keyboard
- LED display
- serializer
- timer

all of these controlled by a microprocessor, which is a discovery that can have innumerable applications:

- it can be used generally in private houses, making it possible to telephone without using a dial or keyboard, but by means of the human voice;
- it can be used to advantage by persons who are blind, infirm or immobile. To mention an example consider the advantage in calling emergency (in Italy. 113);
- it can usefully be employed in offices, where, while continuing with a task one can ask PARITEL to make a call.

If this system is furnished with a miniaturized transmitter-receiver it can be used over a useful area (within a radius of about 700-800 metres from the telephone base) in the same way, i.e. to make a call using the human voice e.g. from the garage or garden or the surroundings of the home or office.

The following description of the invention with reference to the attached drawings is presented by way of illustration and is not meant to limit its application. The description relates to a form of realization at present preferred by the inventor but it may be equally well realized, still respecting the philosophy of the invention, by conveniently modifying the arrangement of the separate parts forming the system.

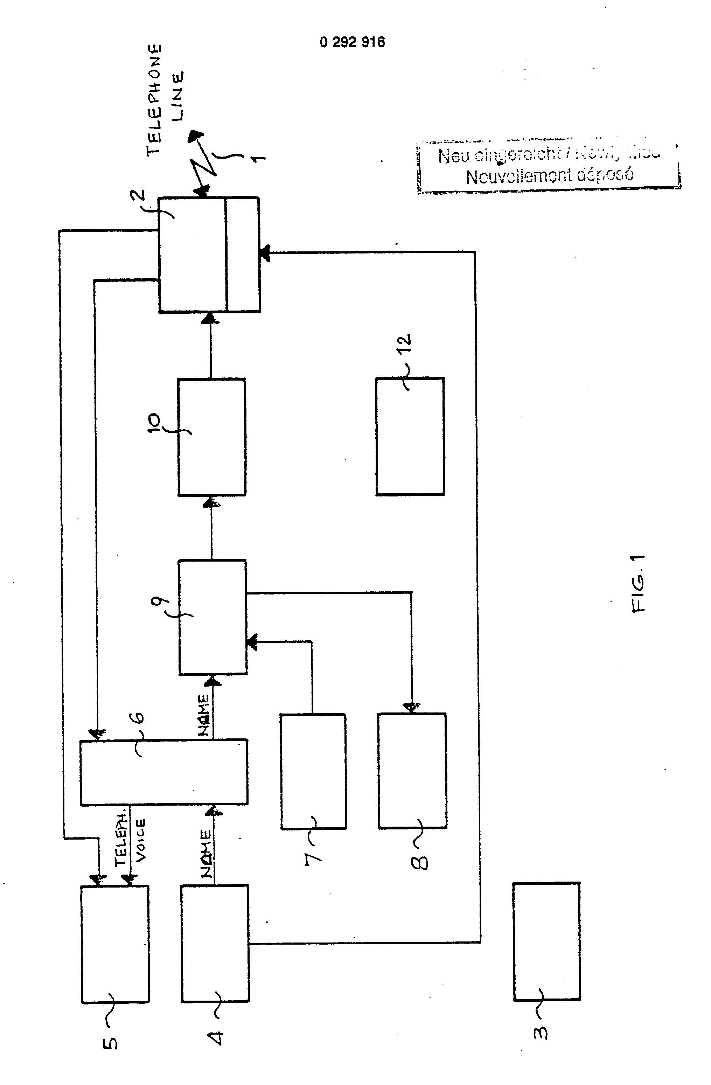

Fig. 1 contains the block diagram of the PARITEL which shows:

1 The telephone line connecting the telephone network.
2 Telephone
3 Power supply
4. Microphone
5 Loudspeaker
6 Voice interface
7 Keyboard
8 Display
9 Memory
10 Serializing and timing circuit
12 Microprocessor

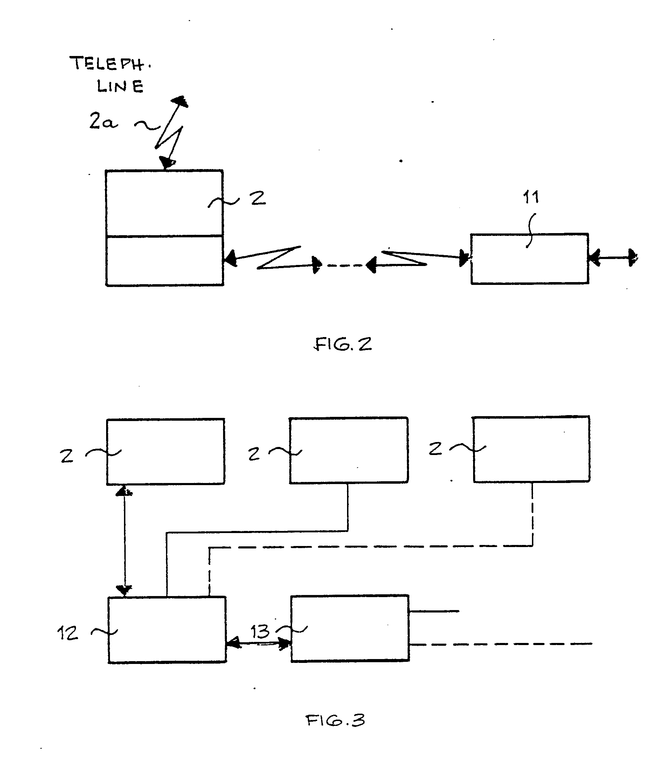

Fig.2 shows the telephone connection to a portable transmitter-receiver. The following may be seen:
2 The PARITEL telephone system
11 Mobile transmitter receiver
2a Telephone line

Fig. 3 shows the diagram of possible connections between PARITEL systems and n mass memories. The following may be seen:
2 PARITEL system
12 Central processor
13 Mass memory (e.g. telephone list)

Fig. 4 is a flow diagram clarifying the functioning of the system which will be described later.

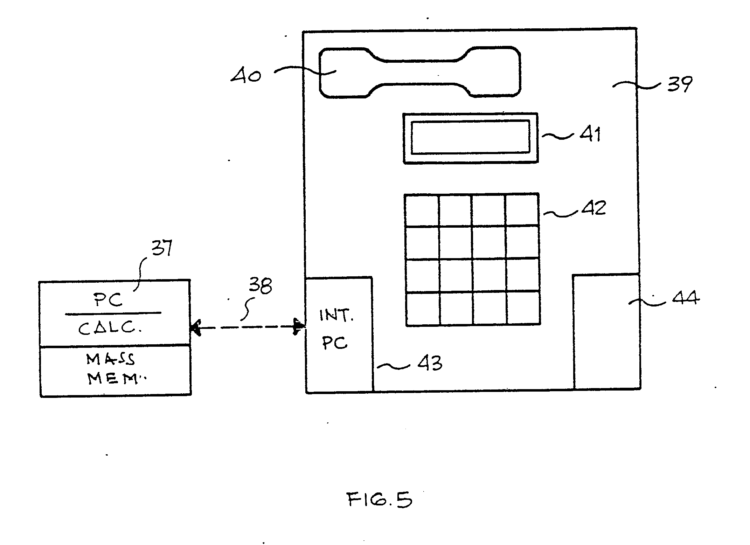

Fig. 5 shows the general layout of the PARITEL system in which:
37 Mass memories, etc.
38 Line connecting the computer
39 The PARITEL set in which may be seen:
40 The traditional telephone hand set
41 Display
42 Alphanumeric keyboard
44 Mobile transmitter-receiver

The physical layout shown can be arranged differently by someone concerned with layout. Now the parts which form the PARITEL with the listed:

### Loudspeaker

Reproduces the synthesized voice of the telephone or, as an alternative to normal telephone handset, the voice of the user with whom a telephone conversation is being made.

### Microphone

Accepts the voice of the user (or users) for the commands or is used for the conversation as an alternative to the hand set.

### Voice interface

This is of the type now on the market (e.g. NEC) and allows the recognition of the voice (of one or more users) and the synthesis of the telephone voice for conventional phrases. The interface can recognise phrases of the type:

"Name" call "Name 1",

where "Name" is the name of the telephone and "Name 1" is that of the user it is desired to call.

The interface is "taught" to recognise the voices of the users and is commanded by means of its preregistered name.

The interface will produce synthesized conventional phases such as:

"I am calling Charles"

"The number is engaged"

"You can speak"

or in the case of receiving a telephone call:

"Name there is a telephone call for you", where "Name" is the name of the owner of the telephone.

## Memory of telephone names and numbers

This is a semiconductor memory, managed by a microprocessor, which contains the names known to the system with their telephone numbers (Directory). The Directory is updated by the owner of the telephone by means of the alphanumeric keyboard and LED display.

## Keyboard

This is an alphanumeric keyboard used to insert the Directory data into the memory and forms an alternative to the voice command, especially in the case of new telephone numbers not included in the Directory.

## Display

This is a LED alphanumeric display used to display the telephone numbers and names that are called

## Serializer and timer

This is managed by a microprocessor and serializes and adapts the Directory numbers to the telephone standard.

## Telephone

This is a conventional telephone with a handset that the user can use as an alternative to the microphone (1) and loudspeaker (2).

## Microprocessor

This is a microprocessor of the type at present used commercially (e.g. Intel 8085) which controls the operations of the system described.

## Power supply

This power supply converts the mains supply voltage to the d.c. required for the system.

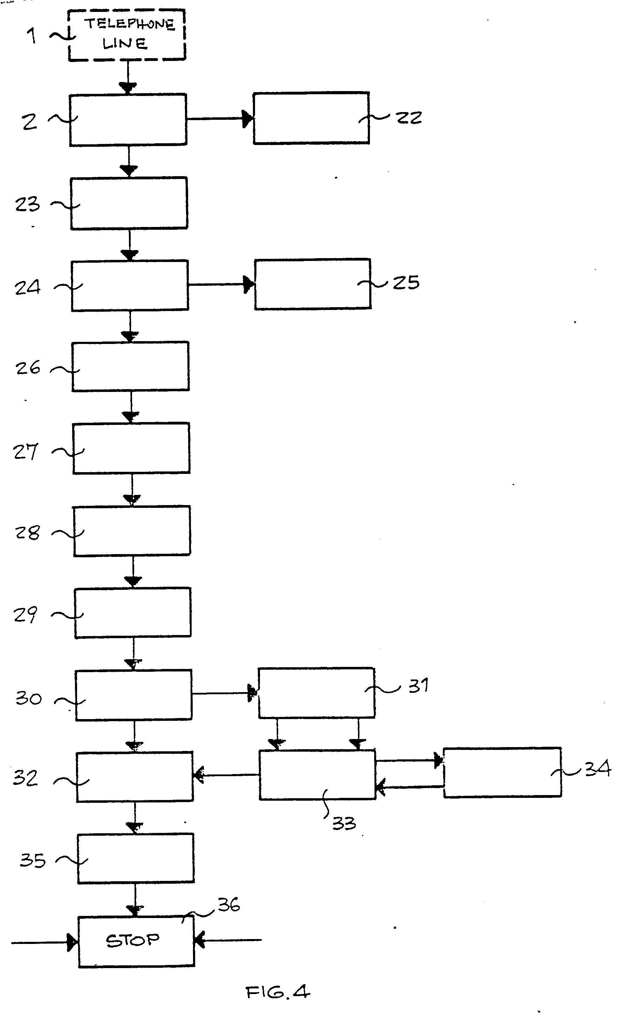

With reference to Fig. 4 the functions of the PARITEL are described below.

The user makes a telephone call either by raising the telephone in the conventional way or by pronouncing the key word which gives access to the telephone line.

The line (1) has two possibilities: to find the line engaged (22) on free (23). A free signal will cause the system to pronounce the name of the user called (27).

The system may not recognise the voice asking for the call and so closes the line (25).

The system recognises the voice (26), synthesizes the name pronounced and automatically forms the number corresponding to the name pronounced (30) by means of a selection (29).

The system may find the line engaged (31), and in this case repeats the operations until it becomes free (33) or the system finds the line free (32) and the connection is made (35).

To conclude the conversation one may use a key word (36) (e.g. STOP), if the conversation is made without the handset, or replace the handset.

One of the main advantages of the system to be emphasized is that of avoiding the unauthorized use of ones telephone by other people. A classic example is that in the absence of the owner anyone can make telephone calls even very expansive ones such as these made abroad.

The characteristc of only recognising a certain number of voices ensures that only the authorised persons can use the telephone. If the system is suitably programmed anyone can call the emergency and ambulance numbers (113 and 116 respectively in Italy).

Also one of the many possible options with the system could be the fitting of a telemeter or a LED clock or other devices.

## Claims

1. Telephone system which by means of the human voice allows the selection of a telephone number by saying only "Name" of the user being called, synthesizes a voice which produces standard phrases and being characterized by having a system configuration comprising (see fig. 1):
Loudspeaker
Microphone
Voice interface
Memory of names and telephone numbers
Alphanumeric keyboard
Alphanumeric display
Serializer and timer
Telephone with conventional handset
Microprocessor
Power supply.

2. Telephone system as in claim 1 characterized by being connected to a transmitter receiver (Fig. 2) so that the user obtains connections and listens and speaks as if he were at the telephone base, the said transmitter receiver being also capable of advising the user vocally that a call is being received.

3. Telephone system as in claims 1 and 2 characterized by being capable of restricting the use of the telephone to a limited number of persons.

4. Telephone system as in the preceding claims characterized by being capable of memorizing one or more telephone directories by the use of a mass memory (e.g. disc) accessible to one or more telephones.

5. Telephone system as in the preceding claims characterized by having a compact ergonomic and functional layout (Fig. 5) able to contain telephone handset, microphone, loudspeaker, transmitter receiver, line switch with "Host" or personal computer and/or mass memory, alphanumeric keyboard, display, clock telemeter etc.

6. Telephone system as in preceding claims characterized by being suited to resting on a flat surface or attaching to a wall.

7. Telephone system as in preceding claims characterized by being also mobile, i.e. adapted to use in a vehicle.

8. Telephone system as in previous claims characterized by being capable of military applications.

FIG. 1

0 292 916

TELEPH.
LINE

2a

2

11

FIG. 2

2

2

2

12

13

FIG. 3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 177 405 (REGIE RENAULT)<br>* Page 4, line 5 - page 18, line 31; figures * | 1 | H 04 M 1/27 |
| A | | 2,7 | |
| X | EP-A-0 194 387 (TOMY KOGYO)<br>* Page 5, line 2 - page 15, line 32; figures * | 1 | |
| X | WO-A-8 701 546 (MOTOROLA)<br>* Page 5, line 25 - page 17, line 8; figures * | 1 | |
| A | | 2,7 | |
| X | US-A-4 644 107 (CLOWES)<br>* Column 2, line 27 - column 7, line 50; figures * | 1 | |
| A | | 4 | |

TECHNICAL FIELDS SEARCHED (Int. Cl.4)

H 04 M

The present search report has been drawn up for all claims

| Place of search | Date of completion of the search | Examiner |
|---|---|---|
| THE HAGUE | 26-08-1988 | KEPPENS P.M.R. |

EPO FORM 1503 03.82 (P0401)